Europäisches Patentamt

European Patent Office

Office européen des brevets

(11) Numéro de publication : **0 140 742 B1**

(12) **FASCICULE DE BREVET EUROPÉEN**

(45) Date de publication du fascicule du brevet :
15.06.88

(51) Int. Cl.⁴ : **A 61 G 5/00, B 60 P 1/46**

(21) Numéro de dépôt : **84401835.8**

(22) Date de dépôt : **14.09.84**

(54) Véhicule perfectionné, pouvant être utilisé notamment par une personne handicapée.

(30) Priorité : **15.09.83 FR 8314714**

(43) Date de publication de la demande :
**08.05.85 Bulletin 85/19**

(45) Mention de la délivrance du brevet :
**15.06.88 Bulletin 88/24**

(84) Etats contractants désignés :
**AT BE CH DE FR GB IT LI LU NL SE**

(56) Documents cités :
**CA-A- 1 087 555**
**DE-A- 1 211 355**

(73) Titulaire : **Gateau, Eugène**
**La Marcquinière**
**F-85220 Coex (FR)**

(72) Inventeur : **Gateau, Eugène**
**La Marcquinière**
**F-85220 Coex (FR)**

(74) Mandataire : **Polus, Camille et al**
**c/o Cabinet Lavoix 2, Place d'Estienne d'Orves**
**F-75441 Paris Cedex 09 (FR)**

## Description

L'invention concerne les véhicules automobiles aménagés, notamment pour recevoir, comme conducteur ou comme passager, une personne handicapée se déplaçant sur un fauteuil roulant.

On connaît déjà de tels véhicules.

En particulier, le brevet CA-A-1 087 555 décrit un véhicule équipé d'une plate-forme destinée à recevoir le fauteuil roulant et qui peut être déplacée verticalement par rapport à un support, lui-même déplaçable horizontalement en translation dans des glissières portées par le plancher du véhicule. Cependant, dans cet agencement connu, la nature des moyens de levage de la plate-forme et la position des glissières limitent son utilisation à un véhicule de type utilitaire et ne permettent pas l'adaptation d'un véhicule automobile normal.

Pour remédier à cet inconvénient, la présente invention se propose de réaliser avec un châssis ordinaire et sans faire appel à des plans inclinés, un véhicule permettant un accès ou un chargement facile, notamment pour une personne handicapée se déplaçant sur un fauteuil roulant.

Elle a pour objet un véhicule automobile comprenant un habitacle muni d'un pavillon recouvrant l'habitacle et d'un hayon s'ouvrant vers le haut et articulé sur le pavillon, des moyens de guidage s'étendant à peu près horizontalement suivant une direction à peu près perpendiculaire au côté arrière de l'habitacle, un premier support mobile dans ces moyens de guidage entre deux positions estrêmes dans l'une desquelles il se trouve au moins en partie à l'extérieur du véhicule et un second support porté par le premier support et relié à ce dernier par des moyens de levage, l'habitacle comportant des parois latérales délimitant des passages de roues, saillant intérieurement, les moyens de guidage étant disposés au-dessus des passages de roues à peu près contre les parois latérales de l'habitacle et s'étendant sur toute la longueur de l'habitacle, le hayon étant articulé autour d'un axe transversal situé approximativement au milieu de la longueur du pavillon.

Suivant d'autres caractéristiques, le véhicule comporte un plancher horizontal dans son ensemble délimitant la partie inférieure de l'habitacle et une partie du plancher située à l'emplacement du poste de conduite est surbaissée par rapport au reste du plancher.

L'invention sera mieux comprise à l'aide de la description qui va suivre, donnée uniquement à titre d'exemple et faite en se référant aux dessins annexés, sur lesquels :

la Fig. 1 représente une vue schématique en perspective d'un dispositif équipant un véhicule suivant l'invention ;

la Fig. 2 représente une vue en perspective d'un détail du dispositif de la Fig. 1 ;

les Fig. 3 et 4 sont des vues schématiques en élévation d'un véhicule conforme à l'invention, dans deux positions d'utilisation ;

la Fig. 5 est une vue de côté schématique partielle d'une variante du dispositif de la Fig. 1.

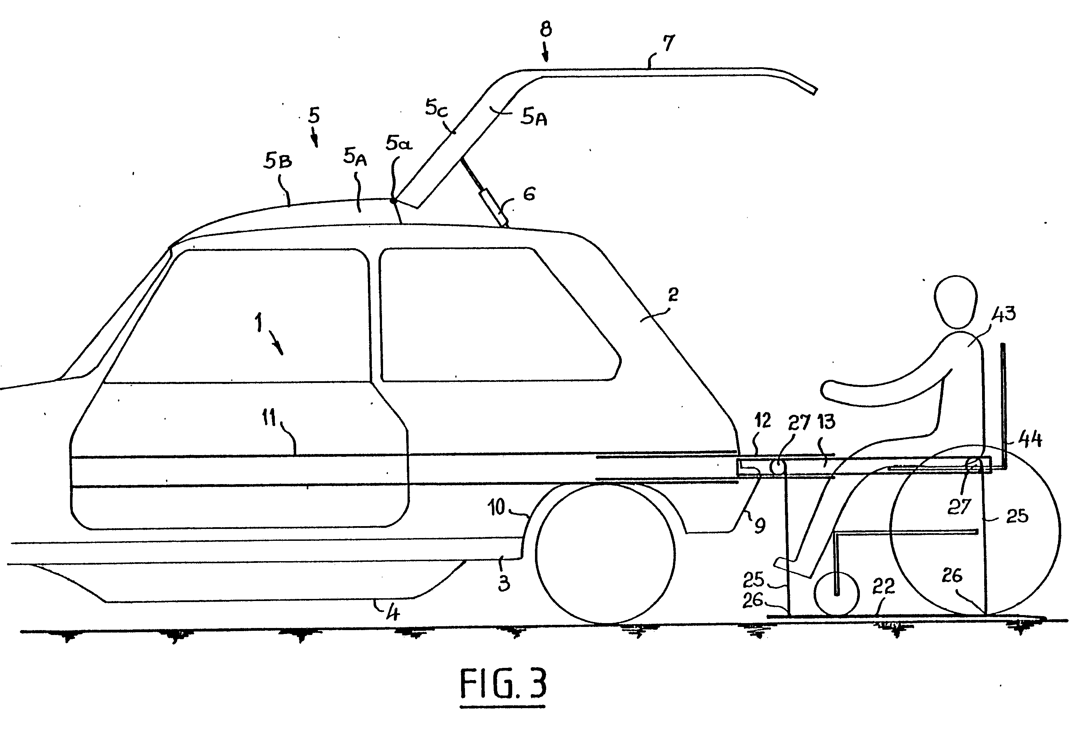

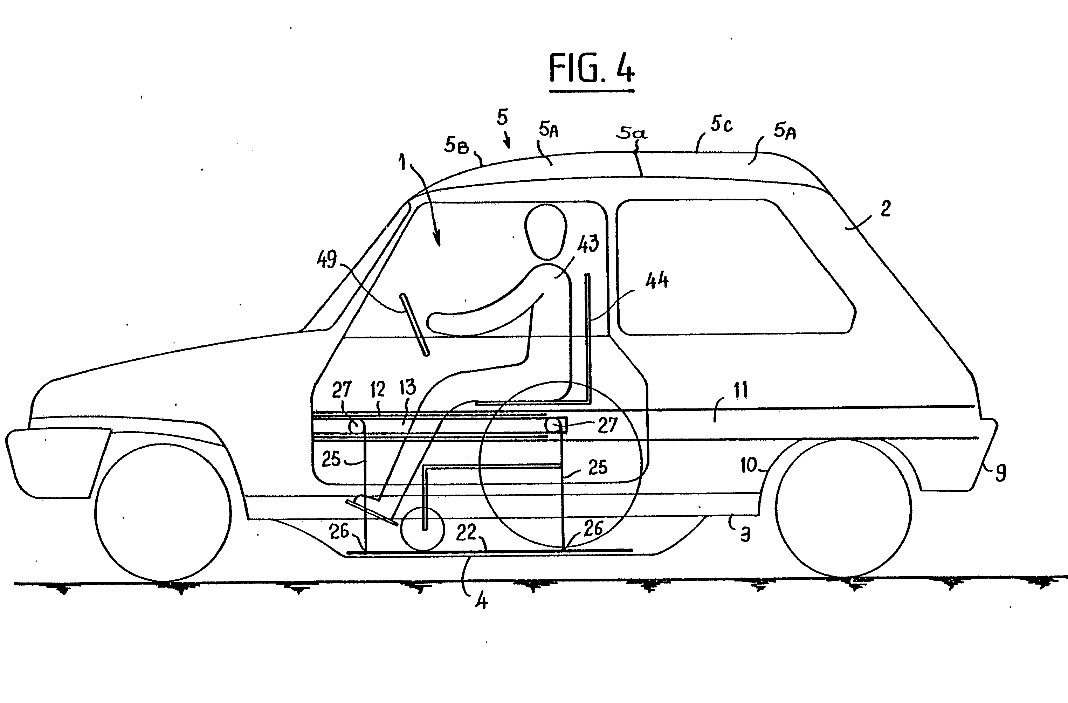

Sur les Fig. 3 et 4 est schématisé un véhicule conforme à l'invention, réalisé à partir d'une autre automobile de série, à deux volumes, d'un modèle courant.

On se bornera ici à décrire les principales modifications apportées au véhicule de base.

Un habitacle 1 est délimité latéralement par des parois 2 sensiblement planes et verticales disposées longitudinalement, et vers l'avant par un tablier, un tableau de bord et un pare-brise classiques. Un plancher 3 horizontal dans son ensemble comporte à l'emplacement du siège du conducteur, une partie 4 surbaissée au-dessous du plan des axes des roues, tandis que le reste du plancher 3 se trouve à son niveau habituel.

Un pavillon 5 sensiblement plan et muni de rebords latéraux 5A venant prolonger les parois latérales 2 recouvre l'habitacle 1. Il s'élève en pente douce vers l'arrière et comporte deux parties. Une partie avant 5B est fixe, et des charnières 5a la relient à une partie arrière 5C articulée.

L'axe d'articulation est transversal et se situe à peu près à mi-pavillon. Cette partie arrière 5C est reliée aux parois latérales 2 par des vérins 6 téléscopiques et prolongée vers l'arrière par un panneau 7 venu d'une pièce avec elle, avec lequel elle forme un hayon 8 s'ouvrant vers le haut.

En position basse ou fermée, ce panneau 7 s'étend d'une paroi latérale à l'autre, et descend jusqu'au ras du pare-choc arrière 9.

Les parois latérales comportent un passage de roue 10 en saillie vers l'intérieur de l'habitacle.

A peu près contre les parois 2 et au-dessous de ce passage de roue 10 sont fixés des rails 11 ou glissières de guidage, fixés à la caisse du véhicule par soudure ou par tout autre moyen approprié. Ces glissières 11 sont rectilignes avec un profil en C et disposées dans un plan sensiblement horizontal, parallèles entre elles, et s'étendent sur toute la longueur de l'habitacle, les ouvertures des C se faisant face. Une glissière intermédiaire 12 rectiligne et à profil en C, est emboîtée dans chaque glissière de guidage 11 et plus courte que ces dernières.

Les glissières intermédiaires 12 coulissent librement dans les glissières de guidage 11 et leurs ouvertures sont également disposées face à face. Elles peuvent se déplacer longitudinalement de l'avant des glissières de guidage 11 jusqu'à une position extérieure dans laquelle elle sortent partiellement de l'habitacle 1, à l'arrière du véhicule, comme le montrent les Fig. 3 et 4. Des butées prévues sur les jeux de glissières déterminent leurs positions extrêmes.

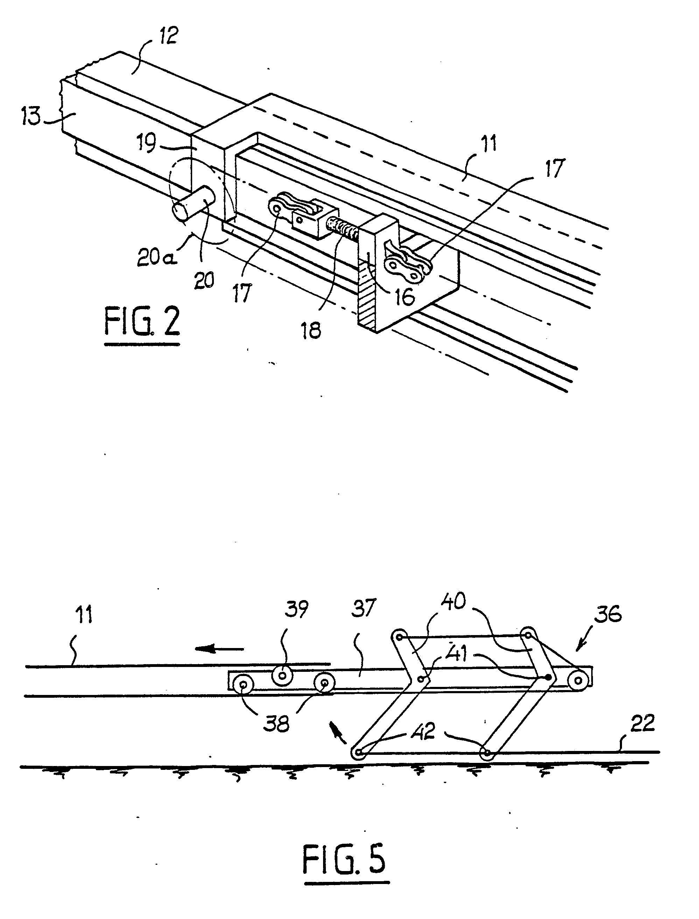

Dans chaque glissière intermédiaire 12, un longeron 13 à section rectangulaire est monté coulissant. Les longerons 13, de même longueur à peu près que les glissières intermédiaires 12, sont reliés entre eux par une traverse 14 avec laquelle ils forment un support 15 en forme de cadre en U ouvert vers l'arrière du véhicule, coulissant longitudinalement dans les glissières 12 et pouvant se déplacer de l'avant de l'habitacle 1 à une position extrême arrière où les glissières 12 sortent partiellement des glissières de guidage 11 et les longerons 13 sortent partiellement des glissières intermédiaires, de sorte qu'ils se trouvent presque entièrement à l'extérieur de l'habitacle 1. A leur extrémité extérieure, les longerons 13 comportent des épaulements 13a destinés à venir en butée contre l'extrémité des glissières intermédiaires 12. Une patte 16 fait saillie vers le haut sur l'extrémité de gauche de la traverse 14 et sert de point d'attache aux deux extrémités d'une chaîne d'entraînement 17 munie d'un mécanisme 18 de tension de chaîne (Fig. 2). A l'extrémité arrière de la glissière 11 de guidage de gauche est fixée une patte 19 en forme d'équerre, reliée à l'aide supérieure de la glissière 11 de manière à fermer partiellement le C.

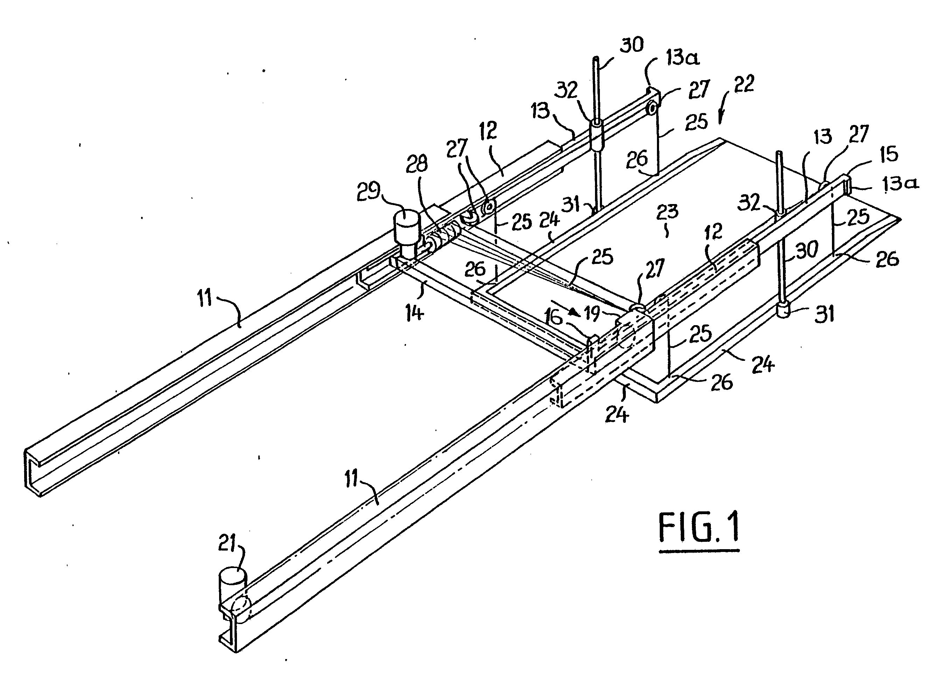

Sur cette patte est fixé un axe 20 sur lequel un pignon 20a est monté fou. La chaîne 17 passe sur ce pignon et sur un autre pignon solidaire en rotation de l'arbre de sortie d'un moto-réducteur électrique 21 disposé à l'extrémité avant de cette glissière 11 de gauche, à laquelle il est fixé de façon adéquate. Le circuit de la chaîne 17 est représenté en traits mixtes sur les Fig. 1 et 2.

Un second support 22 en forme de plateau rectangulaire est porté par le support 15. Ce plateau 22 disposé horizontalement est constitué d'une plaque de métal 23 renforcée sur trois de ces côtés par des profilés 24. Deux câbles 25 sont attachés en deux points 26 longitudinalement espacés sur chaque profilé 24 latéral. Après passage sur un jeu de poulies de renvoi 27 montées folles sur le support 15 et disposées comme indiqué sur la Fig. 1, les quatre câbles 25 s'enroulent simultanément sur un tambour 28 solidaire en rotation de l'arbre de sortie d'un motoréducteur 29. Ce motoréducteur 29 est fixé sur le côté droit de la traverse 14.

Une tige 30 de guidage, cylindrique est fixée verticalement par son extrémité inférieure au moyen d'une bride 31 à un point situé à peu près au milieu du bord extérieur de chaque profilé latéral 24. Chaque tige 30 est montée coulissante dans un manchon 32 cylindrique fixé de façon correspondante à l'intérieur des longerons 13. Les brides 31 et/ou les manchons 32 peuvent être articulés par des rotules sur leurs supports respectifs.

Sur la Fig. 5, un support 36 coulissant dans les glissières de guidage 11 différent du support précédemment décrit est schématisé.

Ce support est en forme de H, placé horizontalement, les branches latérales 37 du H coulissant dans les glissières de guidage 11. La partie de chaque branche 37 située vers l'avant du véhicule est munie de trois galets de roulement disposés en triangle. Les deux galets 38 de base, montés fous sur le H, roulent sur l'aile inférieure du C d'une glissière 11, tandis que le galet 39 supérieur, monté fou entre les deux autres, roule sur l'aile supérieure.

D'autre part, le second support est relié au premier par quatre leviers 40 coudés, disposés parallèlement entre eux aux quatre sommets d'un rectangle, chacun pouvant tourner dans un plan vertical autour d'un axe 41 horizontal reliant leur coude aux longerons 37. Leur extrémité inférieure est articulée sur l'armature du plateau 22 par un second axe 42. Leur branche supérieure est reliée au motoréducteur 29 de levage par un jeu adéquat de câbles et poulies de renvoi. Les axes 41 et 42 des deux leviers 40 situés d'un même côté des supports 36 et 22 sont situés aux sommets d'un parallélogramme déformable.

Le fonctionnement de l'installation représentée sur les Fig. 1, 2, 3 et 4 est le suivant. On admet que les commandes d'ouverture du hayon 8 (serrure et vérins) et des motoréducteurs 21 et 22 sont munis de dispositifs permettant de les commander à distance, par exemple à l'aide d'un boîtier à infrarouges du type utilisé pour les téléviseurs. Une personne handicapée 43 se déplaçant sur un fauteuil roulant 44 et disposant de l'usage de ses mains, commande à distance et successivement l'ouverture du hayon 8, la sortie en position extrême extérieure du support 15, la descente du plateau 22 jusqu'à ce qu'il repose sur le sol. La personne amène alors son fauteuil roulant 44 sur le plateau 22, ce qui ne demande pas d'effort particulier et commande le verrouillage du fauteuil sur le plateau par un dispositif non représenté.

L'utilisateur commande alors la montée du plateau 22 par le motoréducteur 29, et arrive à la hauteur des glissières de guidage 11, il commande l'introduction du support 15 dans le véhicule par le motoréducteur 21. Bien entendu, des contacts de fin de course peuvent être prévus pour provoquer l'arrêt du plateau dans la position correcte.

Le hayon est agencé pour qu'en position ouverte, le sommet de la tête de l'utilisateur passe sans difficultés jusqu'à ce que l'extrémité arrière du plateau 22 ait dépassé les passages de roues 10. Il commande alors une première phase de descente jusqu'au niveau du plancher 3, et poursuit le glissement vers l'avant. Arrivé à portée du volant 49, il commande la phase ultime de descente dans la partie 4 de plancher surbaissé, et la fermeture du hayon 8. On notera qu'à partir du verrouillage du fauteuil, toutes les phases ultérieures de l'introduction peuvent être programmées de façon simple, ou automatisées à l'aide de microcontacts placés judicieusement. Pour sortir du véhicule, il suffit d'opérer en sens inverse.

L'avantage majeur de l'invention est de fournir à une personne handicapée l'usage autonome d'un véhicule relativement économique, puisqu'il est réalisé à partir d'un modèle courant, au moyen de modifications secondaires de la carrosserie, de l'installation d'un dispositif assez simple et de l'adaptation aujourd'hui classique des commandes du véhicule.

De plus, un grand choix de modèles peut être offert, et il est agréable pour une personne handicapée de pouvoir utiliser de façon autonome un véhicule relativement banal.

Dans un but d'économie, ou d'amélioration, les motoréducteurs, câbles, chaînes et poulies peuvent être remplacés par d'autres dispositifs, tels que vérins hydrauliques ou à vis sans fin.

## Revendications

1. Véhicule automobile comprenant un habitacle (1) muni d'un pavillon (5) recouvrant l'habitacle (1) et d'un hayon (8) s'ouvrant vers le haut et articulé sur le pavillon, des moyens de guidage (11) s'étendant à peu près horizontalement suivant une direction à peu près perpendiculaire au côté arrière de l'habitacle, un premier support (15) mobile dans ces moyens de guidage (11) entre deux positions extrêmes dans l'une desquelles il se trouve au moins en partie à l'extérieur du véhicule et un second support (22) porté par le premier support (11) et relié à ce dernier par des moyens de levage (25, 27, 28, 29 ; 40, 41, 42), l'habitacle comportant des parois latérales (2) délimitant des passages de roues (10), saillant intérieurement, les moyens de guidage (11) étant disposés au-dessus des passages de roues (10), à peu près contre les parois latérales (2) de l'habitacle (1), et s'étendant sur toute la longueur de l'habitacle (1), le hayon (8) étant articulé autour d'un axe transversal situé approximativement au milieu de la longueur du pavillon.

2. Véhicule suivant la revendication 1, comportant un plancher (3) horizontal dans son ensemble délimitant la partie inférieure de l'habitacle (1), et une partie (4) du plancher (3) située à l'emplacement du poste de conduite surbaissée par rapport au reste du plancher (3).

3. Véhicule suivant la revendication 1, comportant des moyens d'entraînement distincts pour, d'autre part, déplacer le premier support (15) par rapport aux moyens de guidage (11) et, d'autre part, déplacer verticalement le deuxième support (22) par rapport au premier.

4. Véhicule suivant la revendication 3, dans lequel le premier support (15) est relié à un motoréducteur électrique (21) par une chaîne d'entraînement (17) et des pignons ou autre mécanisme électromécanique ou hydraulique.

5. Véhicule suivant la revendication 1, dans lequel les moyens de levage comportent des câbles (25) auxquels le second support (22) est suspendu et s'enroulent simultanément sur un tambour (28) solidaire en rotation de l'arbre de sortie d'un motoréducteur (29) après passage sur un jeu de poulies de renvoi (27) fixé au premier support (15).

6. Véhicule suivant la revendication 1, dans lequel le second support (22) est en outre relié au premier support (15) par des tiges (30) fixées par une de leurs extrémités au second support (22) et coulissant dans des manchons (32) fixés au premier support.

7. Véhicule suivant la revendication 1, dans lequel les moyens de levage comprennent deux jeux de leviers coudés (40) articulés sur les premier et deuxième supports constituant deux parallèlogrammes articulés, ces leviers étant reliés à des moyens d'actionnement.

8. Véhicule suivant la revendication 1, dans lequel les moyens de guidage (11) comprennent deux glissières constituées par des profilés en C.

9. Véhicule suivant la revendication 1, dans lequel le premier support (15) est monté coulissant dans des glissières intermédiaires (12), elles-mêmes montées coulissantes dans les moyens de guidage (11) et pouvant faire saillie partiellement à l'extérieur de l'habitacle.

## Claims

1. A motor vehicle comprising a compartment (1) including a roof (5) covering said compartment (1) and a rear door (8) movable upwardly and pivotally mounted on said roof, guide means (11) extending substantially horizontally in a direction substantially perpendicular to the rear side of said compartment, a first support (15) movable in said guide means (11) between two end positions, in one of which it is at least partly located outside the compartment and a second support (22) carried by said first support (15) and raising means (25, 27, 28, 29 ; 40, 41,42) connecting said second support to said first support, said compartment having lateral walls (2) defining wheel arches (10), extending inwardly, said guide means (11) being disposed above said wheel arches (10), approximately against said lateral walls (2) of said compartment (1) and extending substantially throughout the length of said compartment (1), said rear door (8) being pivotally mounted about a transversal axis located approximately in the middle of the length of said roof.

2. A motor vehicle according to claim 1, comprising a horizontal floor (3) defining a lower part of said compartment, a part (4) of said floor (3) located in the region of the driving station being at a lower level relative to the rest of said floor (3).

3. A motor vehicle according to claim 1, comprising distinct driving means for, on one hand, shifting said first support (15) relative to said guide means (11) and, on the other hand, vertically shifting said second support (22) relative to said first support.

4. A motor vehicle according to claim 3, wherein said first support (15) is connected to an electro motor-speed reducer unit (21) by a driving chain (17) and sprocket wheels or any other electromechanical or hydraulic mechanism.

5. A motor vehicle according to claim 1, wherein said raising means comprise cables (25) from which said second support (22) is suspended and which are wound simultaneously around a drum (28) fixed to the output shaft of a motor speed reducer unit (29) after extending around a set of pulleys (27) mounted on said first support (15).

6. A motor vehicle according to claim 1, wherein said second support (22) is further connected to said first support by rods (30) fixed at one of their ends to said second support (22) and slidably mounted in sleeves (32) fixed to said first support.

7. A motor vehicle according to claim 1, wherein said raising means comprise two set of cranked levers (40) pivotally mounted on said first and second supports and constituting two articulated parallelogram structures, and actuating means connected to said levers.

8. A motor vehicle according to claim 1, wherein said guide means (11) comprise two slideways constituted by C-section members.

9. A motor vehicle according to claim 1, wherein said first support (15) is slidably mounted in intermediate slideways (12), said intermediate slideways being slidably mounted in said guide means (11) and being able to partly extend outside of said compartment.

**Patentansprüche**

1. Kraftfahrzeug, mit einer Zelle (1), die mit einem die Zelle (1) abdeckenden Dach (5) und einer sich nach oben öffnenden und an dem Dach angelenkten Heckklappe (8) versehen ist, Führungsmitteln (11), welche sich ungefähr horizontal in einer zum Heck der Zelle ungefähr senkrechten Richtung erstrecken, einem in diesen Führungsmitteln (11) zwischen zwei Endstellungen beweglichen ersten Träger (15), der sich in der einen von ihnen wenigstens zum Teil außerhalb des Fahrzeugs befindet, und einem von dem ersten Träger (15) gehaltenen und mit diesem durch Hebemittel (25, 27, 28, 29 ; 40, 41, 42) verbundenen zweiten Träger (22), wobei die Zelle Seitenwände (2) aufweist, welche die nach innen vorspringenden Radläufe (10) bestimmen, die Führungsmittel (11) über den Radläufen (10) in etwa an den Seitenwänden (2) der Zelle (1) angeordnet sind und sich über die gesamte Länge der Zelle (1) erstrecken, und die Heckklappe (8) um eine ungefähr in der Mitte der Dachlänge liegende Querachse schwenkbar ist.

2. Fahrzeug nach Anspruch 1, welches einen insgesamt horizontalen Wagenboden (3), der den unteren Teil der Zelle (1) begrenzt, und einen am Ort des Fahrerplatzes liegenden, in Bezug auf den restlichen Wagenboden (3) gedrückten Teil (4) des Wagenbodens (3) aufweist.

3. Fahrzeug nach Anspruch 1, welches unterschiedliche Antriebsmittel aufweist, um einerseits den ersten Träger (15) bezüglich der Führungsmittel (11) zu verschieben und andererseits den zweiten Träger (22) in Bezug auf den ersten vertikal zu versetzen.

4. Fahrzeug nach Anspruch 3, bei welchem der erste Träger (15) durch eine Antriebskette (17) und Ritzel oder einen anderen elektromechanischen oder hydraulischen Mechanismus mit einem elektrischen Getriebemotor (21) verbunden ist.

5. Fahrzeug nach Anspruch 1, bei welchem die Hebemittel Seile (25) umfassen, an welchen der zweite Träger (22) aufgehängt ist und sich nach einem Lauf über einen Satz von am ersten Träger (15) befestigten Umlenkrollen (27) gleichzeitig auf einer mit der Abtriebswelle eines Getriebemotors (29) drehfesten Trommel (28) aufwickeln.

6. Fahrzeug nach Anspruch 1, bei welchem dem der zweite Träger (22) mit dem ersten Träger (15) außerdem durch Stangen (30) verbunden ist, die mit einem ihrer Enden am zweiten Träger (22) befestigt sind und in am ersten Träger befestigten Bûchsen (32) gleiten.

7. Fahrzeug nach Anspruch 1, bei welchem die Hebemittel zwei am ersten und zweiten Träger angelenkte Sätze von Winkelhebeln (40) umfassen, die zwei Gelenkparallelogramme bilden, wobei diese Hebel mit Betätigungsmitteln verbunden sind.

8. Fahrzeug nach Anspruch 1, bei welchem die Führungsmittel (11) zwei durch C-Profile gebildete Gleitschienen umfassen.

9. Fahrzeug nach Anspruch 1, bei welchem der erste Träger (15) gleitend in Zwischengleitschienen (12) angebracht ist, die ihrerseits gleitend in den Führungsmitteln (11) angebracht sind und teilweise aus der Zelle vorstehen können.

FIG.1

FIG. 2

FIG. 5

2

FIG. 3

# FIG. 4

0 140 742